Europäisches Patentamt

European Patent Office

Office européen des brevets

(11) Publication number: **0 231 269**
**B1**

(12) **EUROPEAN PATENT SPECIFICATION**

(45) Date of publication of patent specification: **22.08.90**　　(51) Int. Cl.⁵: **F 16 B 19/05**

(21) Application number: **86904657.3**

(22) Date of filing: **16.07.86**

(86) International application number:
**PCT/US86/01454**

(87) International publication number:
**WO 87/00891 12.02.87 Gazette 87/04**

(54) **FIT-UP FASTENER WITH FLEXIBLE TAB-LIKE RETAINING STRUCTURE AND METHOD OF MAKING SAME.**

(30) Priority: **01.08.85 US 761375**

(43) Date of publication of application:
**12.08.87 Bulletin 87/33**

(45) Publication of the grant of the patent:
**22.08.90 Bulletin 90/34**

(84) Designated Contracting States:
**DE FR GB SE**

(56) References cited:
**US-A-3 203 300**
**US-A-3 295 404**
**US-A-3 367 228**
**US-A-3 421 562**

(73) Proprietor: **HUCK MANUFACTURING COMPANY**
**6 Thomas P.O. Box 19590**
**Irvine, CA 92713 (US)**

(72) Inventor: **SMITH, Walter, J.**
**2609 Mountainview**
**Waco, TX 76710 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

The present invention relates to multiplepiece swage type fasteners including a pin and a collar and more particularly to such fasteners having a flexible connection between the pin and collar to facilitate preassembly of the fastener components with the workpieces to be secured together.

The present invention generally relates to two-piece swage type fasteners or lockbolts of the type illustrated in U.S. Patent No. 3,915,053 of October 28, 1975, U.S. Patent No. 2,531,048 of November 21, 1950, U.S. Patent No. 4,472,096 of September 18, 1984, U.S. Patent No. 4,342,529 of August 3, 1982, and U.S. Patent No. 3,295,404 of January 3, 1967.

The fastener of the present invention, as with this prior art patents, includes a pin and a collar adapted to be swaged into lock grooves in the pin in response to a preselected relative axial force applied between the pin and collar.

In many commercial applications, two-piece threaded fasteners are used and are installed in two or more steps. Thus it is common to secure a structure first by attaching the associated members with the fasteners loosely engaged. This facilitates adjustment and/or alignment of the structural members to a final, desired orientation. Next the fasteners are tightened to a preselected final torque. A traditional problem with torque applied threaded fasteners is that the final clamp load attained is generally unpredictable due to frictional and other factors i.e. friction between nut and engaged workpiece surface, friction in the engaging threads, etc. Two-piece swage type fasteners, however, are not confronted with such frictional problems and hence can provide more uniformly predictable clamp loads. However, the swage type fasteners have not been capable of providing the initial assembly or fit up available with threaded fasteners and still provide a final clamp with only a second, final installation step. Prior threaded swage and/or crimp type fasteners would require extra steps or complex tooling. For example, a threaded crimp type fastener would not provide the same flexibility without complex installation tools: see for example the U.S. Patent No. 3,421,562 of January 14, 1969. While the latter fastener would permit an initial assembly similar to a conventional threaded fastener, the final installation would require either separate additional steps of final torquing and crimping or a complex tool capable of performing the latter steps in sequence.

Thus it is an object of the present invention to provide a novel two-piece swage type fastener for a fastened joint with a pin having a lock groove section with a plurality of lock grooves and with a collar adapted to be swaged into the lock groove section and having a flexible retainer structure engageable with the lock grooves and alloowiing for the pin, collar and the joint to be held together, prior to swage, in a non-permanent pre-assembly.

More specifically, the present invention is provided in a fastening system including a fastener for securing workpieces together in a pre-assembly with said fastener adapted to be finally installed via a relative axial force applied by a tool, said fastener including a pin member having an elongated shank terminating at one end in an enlarged pin head, said shank including a lock portion having a plurality of circumferentially extending lock grooves and lock ridges, each of said lock grooves having a leading side surface and a trailing side surface, a tubular collar adapted to be located on said pin shank and to be swaged into said lock grooves in response to a first preselected magnitude of said relative axial force applicable by the tool said collar having a through bore of a diameter to generally received said lock portion in clearance relationship, and collar retaining means formed at the extremity of one end of said collar and extending radially inwardly relative to said through bore and adapted to engage said lock grooves, characterized in that said retaining means comprises a single tab constructed of a flexible readily deformable material permitting said tab to substantially deform into the shape of the confronting surface of said lock grooves and lock ridges, said tab having a leading surface and a trailing surface to define a contour cooperating with said leading and trailing side surfaces of said lock grooves to facilitate assembly of said collar over said lock grooves and to resist at a substantially higher load the removal of said collar from said lock grooves, and said tab having a preselected strength selected to deform out of said lock grooves in response to a second preselected magnitude of relative axial force applied between said pin member and said collar by the tool with said second preselected magnitude being less than said first preselected magnitude, said tab having its flexibility and circumferential extent selected to permit removal of said collar from said lock grooves at a removal load which is considerably higher than the application load and to permit reapplication of said collar to said pin member to engage said lock grooves for again securing the workpieces together with the desired pre-assembly.

In one embodiment of the present invention the lock grooves of the pin can be in the form of annular grooves or a helical male thread. The collar is preferably provided with a flexible tab-like construction of a preselected circumferential extent such that an initial assembly and limited clamp can be accommodated. In addition the flexible tab-like structure is shaped such as to provide for ease of assembly of the collar onto the pin while providing a higher resistance to disassembly. At the same time, the tab permits disassembly, prior to final installation, in those applications where this may be desired. The tab structure is constructed such that, in response to the relative axial force applied to set the fastener and at a level prior to the initiation of collar swage into the pin lock grooves, it will deform whereby the collar will be free to move axially over the pin and to respond to the installation loads in the same manner as a collar without such a tab structure. In addition the flexible tab is purposely located at either extremity of the collar where its effect on lock groove fill via the swaged collar will be minimal and hence the tab structure, while inhibiting the collar from moving off the pin prior to swage, will not appreciably affect the strength of the installed fastener. Thus the fastener permits the workpieces to be pre-assembled and finally secured together with the desirable high clamp loads available with swage type fasteners.

While the aforesaid patent U.S. No. 3,295,404, shows the use of a retaining ring to hold a pin and collar together, it does not reach the tab-like structure having features as noted above; in addition the present invention provides a unique and simple method of making the tab-like structure and collar combination.

While in one form of the invention the final installation of the fastener can be accomplished with a conventional pull tool, in another form a stump type version of the fastener could be utilized with the final installation effectuated by a squeeze type tool.

One feature of the present invention involves the tab-like structure on the collar of the two-piece swage fastener which is adapted to be deformed out of the lock grooves by a preselected axial load which is less than that at which collar deformation in swage is initiated.

Another feature of the present invention is the provision in a two-piece swage fastener of a tab-like structure that is located at a position to minimize its effect on the lock between the collar and pin.

Other objects, features and advantages of the present invention will become apparent from the subsequent description of preferred embodiments of the invention taken in conjunction with the accompanying drawings, in which:

Figure 1 is a longitudinal view with some portions shown in section and others shown broken away of a fastener, including a pin and a collar, of the present invention in assembly relationship with workpieces and with a portion of a tool shown as applied to the fastener prior to final installation;

Figure 2 is a view similar to that of Figure 1 showing the fastener after it has been set;

Figure 3 is a fragmentary pictorial view of the collar of Figure 1 depicting the tab-like retaining construction in its relaxed condition;

Figure 4 is fragmentary view to enlarged scale of a portion of the pin of Figure 1 depicting the tab-like retaining construction in a lock groove and, in phantom, in a pull groove of the pin;

Figure 5 is a view similar to that of Figure 1 depicting a stump version of the fastener of Figure 1;

Figure 6 is a sectional view showing one step in the method of forming the tab-like retaining structure and simultaneously securing it to the collar;

Figure 7 is the final step in the method of Figure 6; and

Figure 8 is a fragmentary view depicting the retaining tab located at the flange end of the associated collar.

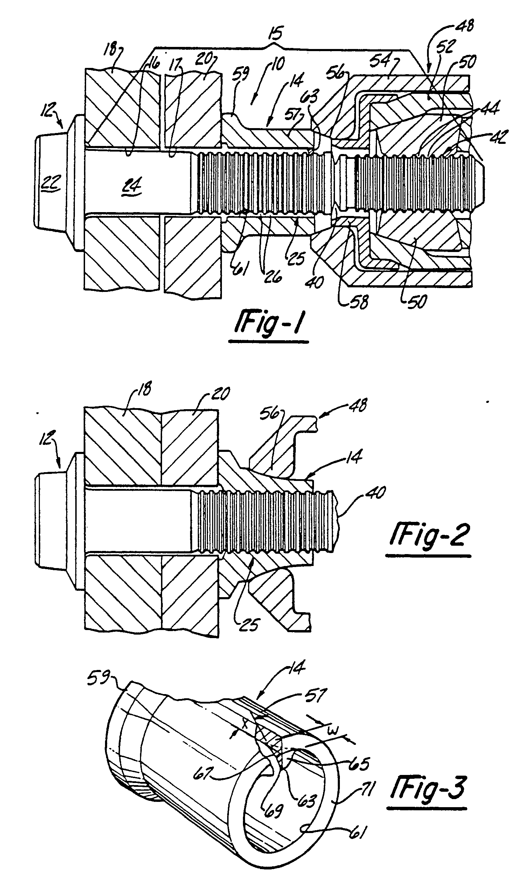

Looking now to Figures 1 and 2, a fastener 10 is shown to include a pin member 12 and a tubular collar 14. Pin member 12 has an elongated shank 15 which extends through aligned bores 16 and 17 in a pair of workpieces 18 and 20, respectively, to be secured together. An enlarged protruding head 22 at one end of shank 15 engages one side of workpiece 18. Adjacent the head 22, the shank 15 has a straight portion 26 which is adapted to be received within aligned bores 16 ad 17 with a clearance fit. Following the straight portion 24 is a lock groove portion 25 defined by a plurality of annular grooves 26.

A breakneck groove 40 is located between the lock groove portion 25 and a gripping or pull portion 42 and defines the weakest portion on the shank 15. The pull portion 42 is comprised of a plurality of annular pull grooves 44; the pull portion 42 is of a reduced diameter relative to the shank portion 24 and the lock groove portion 25. The pull grooves 44 are adapted to be gripped by a tool 48 which is actuable to set the fastener 10. The tool 48 can be generally constructed in a manner known to those skilled in the art and hence is only partially shown for purposes of simplicity. Briefly, the tool 48 has a plurality of jaws 50 having teeth adapted to grip the pin 12 at pull grooves 44. Jaws 50 are located in a tubular collar assembly 52 which is slidably supported in an anvil housing 54 which terminates at one end in a swage anvil portion 56.

The tubular collar 14 has a generally straight shank portion 57 terminating in an enlarged flange 59. The collar 14 has a generally smooth bore 61 of a diameter to be in clearance with the pin shank 15. A flexible tab-like structure 63 is secured to the collar 14 at its outer end (opposite flange 59) and extends radially inwardly sufficiently to engage the pin shank 15.

Looking now to Figure 3, the tab 63, in its relaxed state is constructed to have a front face 65 which extends radially generally transversely or at right angles to the axis of the collar 14. The front face 65 is substantially flush with the outer collar surface 71 within approximately 0.254 mm (.010 inches). The tab 63 is generally wedge shaped and hence has a rear face 67 which extends rearwardly at an angle X of about 30° to about 60°. At the same time, the tab 63 tapers radially in circumferentially opposite directions from its radially innermost point or tip 69. The tab 63 is constructed of a flexible and readily deformable plastic material to permit it to accommodate the shapes of various mating or engaging surfaces.

In operation the pin 12 is located in the workpiece bores 16 and 17 and the collar 14 is located over the pin shank 15. The tab 63 extends radially inwardly sufficiently to engage the ridges of the lock grooves 26. The tab 63, however, being flexible can deform or bend over the ridges of the lock grooves 26 until the collar flange 59 engages the workpiece 20. As will be seen, the tapered or wedge like construction of the flexible tab 63 facilitates movement of the collar 14 onto the pin 12 but requires a significantly higher removal force. The latter is a result both fo the configuration of the tab 63 and of the shape of the lock grooves 26. Note that while the removal load of the tab 63 is considerably higher than its application load, in one form of the invention the collar 14 can still be removed and effectively reapplied again. The latter is advantageous in certain applications where assembly, disassembly and final assembly of workpieces is desired.

As noted, in some applications, it is advantageous to have the workpieces 18 and 20 lightly clamped or even loosely held together to permit an appropriate fit up of the associated structure prior to final installation. After the pin 12 and collar 14 have been pre-assembled as noted the installation tool 48 is applied to the fastener 10 and a relative axial force is applied between the pin 12 and collar 14 via the jaw assembly 50 gripping the pull groove portion 42 and the swage anvil 56 engaging the outer end of the collar 14. As the relative axial force increases, the flexible tab 63 will deform sufficiently to permit the collar 14 to move further axially relative to the pin 12. The workpieces 18 and 20 can now be clamped together at a preselected preload by the relative axial force initially applied between the pin 12 and collar 14 and, as the axial force increases, the collar 14 is swaged into the lock groove portion 25. As the axial force continues to increase, a magnitude will be attained at which the pin 12 will fracture at the breakneck groove 40 completing the setting operation (see Figure 2). Subsequently, upon further actuation of the tool 48, a collar ejector member 58 will be urged forwardly to eject the swaged collar 14 from the anvil 56 thus completing the installation.

Note that the contour of the swage cavity of the anvil 56 and the contour of the outer end of the collar 14 are such that swaging of the collar 14 into the lock grooves 26 will not start to occur at the lower magnitude of relative axial force required to deform, and in a sense to ratchet, the flexible tab 63 over the lock grooves 26 during pull up of the workpieces 18 and 20 at the initiation of the swage operation.

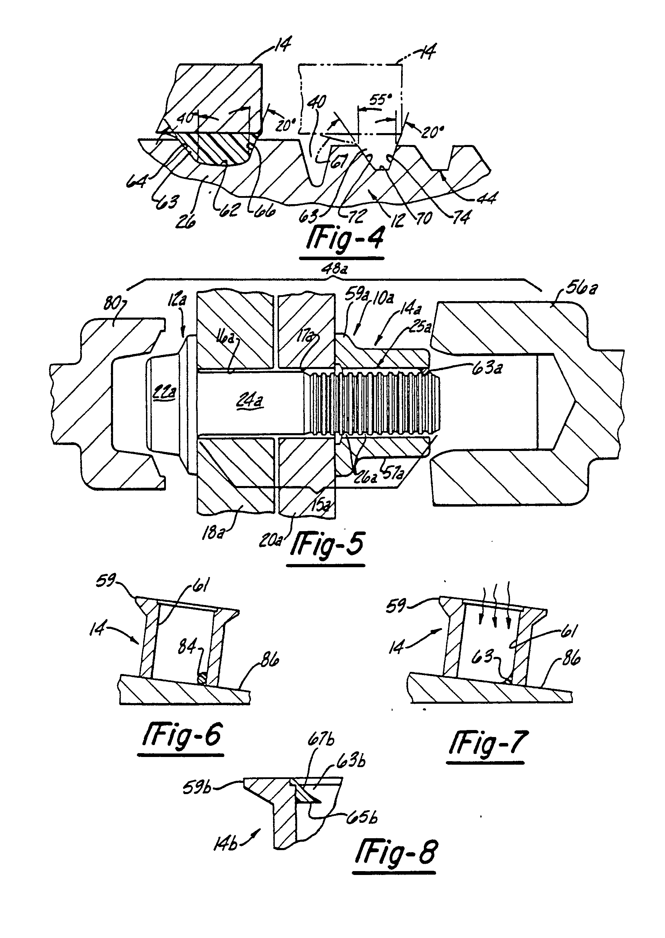

The functioning of the flexible tab 63 with the lock grooves 26 of pin 12 can best be seen in Figure 4. Each of the lock grooves 26 of Figure 4 is of a generally shallow construction and has a leading transition portion 64 extending at a 40° angle with a plane transverse to the axis of pin 12; the trailing transition portion 66 extends at a steeper angle of 20°. The angle of the leading portion 64 facilitates flow of the material of collar 14 in swage while the steeper angled trailing portion 66 provides a buttressing effect relative to the swaged collar material. This buttressing effect facilitates clamping of the workpieces 18 and 20 as the collar 14 elongates during swage. The transition portions 64 and 66 tangentially intercept an arcuate or elliptical root portion 62.

The wedge shape of the flexible tab 63 complements the contour of the lock grooves 26. Thus the leading, angulated surface 67 of tab 63 cooperates with the leading groove surface 64 to facilitate movement of the collar 14 onto the lock groove section 15 of pin 12. On the other hand the transverse trailing section 65 of the flexible tab 63 cooperates with the steeper angled trailing surface 66 of the lock grooves 26 to resist removal of the collar 14 from the pin 12. The tab contour shown also generally facilitates bending of the tab 63 in movement on to the lock groove section 25 while resisting bending in the opposite direction for removal.

In one form, the tab 63 had a maximum axial width W which was equal to or slightly wider than the lock grooves 26. This assured a generally complete fill of the lock groove 26 by the material of the tab 63 over at least some portion of its circumference. This also provides sufficient excess material of the tab 63 in the event the tab 63 is initially partially located between grooves 26. Since the tab 63 extends only partially circumferentially the excess material in a local area can be readily accommodated since the material of the tab 63 is sufficiently flexible to be deformed into the shape of the confronting surface of the lock groove section 25 whether it be in line with a single groove 26 or partially located between lock grooves 26. The general fill of a lock groove 26 by the tab 63 can be seen in Figure 4 where the deformed tab 63 is shown in phantom. Thus the volume of the tab 63 is generally sufficient to define a width when the tab 63 is deformed approximately equal to the width of a lock groove 26.

It may be that in certain conditions of workpieces 18 and 20, the pre-assembly of the pin 12 and collar 14 will not permit location of the tab 63 in line with one of the lock grooves 26. In one form of the invention the tab 63 is provided to have a radial length in excess of the distance of the inside collar bore 61 to the root 62 of a lock groove 26.

In some applications it may be desirable to permit pre-assembly by the engagement of the tab 63 with the pull grooves 44 (see Figure 4). In this case the radial tab length is greater than the distance of the collar bore 61 to the root 70 of the pull grooves 44. Note that in order to facilitate movement of the gripping jaws 50 over the pull grooves 44, the grooves 44 have a leading surface 72 which extends at an angle of about 55° with a plane transverse to the axis of the pin 12. The trailing pull groove surface 74, however, is provided to have a stepper contour, i.e. 20°, to enhance the gripping engagement by a similarly contoured portion of the teeth in the gripping jaws 50. Thus by providing the tab 63 to extend radially to at least the root 70 of the pull grooves 44, the collar 14 can be preassembled and retained to the pin 12 simply by the engagement of the tab 63 with the pull grooves 44. Again the noted contour of the pull grooves 44 facilitates movement of the collar 14 over the leading surfaces 72 of the pull grooves 44 while resisting removal against the steeper trailing surfaces 74. Of course, the retention force between the pin 12 and collar 14 will not be as significant as when the tab 63 engages the lock grooves 26. In Figure 4 the engagement of the tab 63 with the pull grooves 44 is depicted in phantom.

While the pin 12 is shown to have lock grooves 26 of the shallow, streamlined contour shown, the collar 14 may be used with other pins having lock grooves of a different contour and can be annular or helical. One such different contour is shown in the multigrip type fastener of the U.S. Patent No. 4,342,529.

Thus, the use of a tab which extends for only a limited portion of the circumference of the associated lock groove permits the tab to be used with a variety of groove contours. The limited circumferential extent of the tab 63 permits any local, excess in volume of tab material to be deformed circumferentially. The latter facilitates manufacture since the same tab can be provided for the same collar albeit for different pins.

The fastener 10 shown and discussed above is a pull type fastener adapted to be finally installed by a conventional pull type tool 18. The features of the invention, however, are also applicable to a stump type fastener adapted to be finally installed by a squeeze type tool. Thus a stump type fastener is shown in Figure 5 in which components similar to like components in the embodiment of Figures 1 and 2 have been given the same numeral designation with the addition of the letter postscript "a".

Looking now to Figure 5, a stump type fastener 10a is shown to include a pin member 12a and tubular collar 14a. Pin member 12a has an elongated shank 15a which extends through aligned openings 16a and 17a in a pair of workpieces 18a and 20a, respectively, to be secured together. An enlarged protruding head 22a at one end of shank 15a engages one side of workpiece 182. Adjacent the head 22a, the shank 15a has a straight portion 24a which is adapted to be received within aligned bores 16a and 17a with a clearance fit. Following the straight portion 24a is a lock groove portion 25a defined by a plurality of annular grooves 26a.

The tubular collar 14a has a generally straight shank portion 57a terminating in an enlarged flange 59a. The collar 14a is identical to collar 14 and is provided with a flexible tab 63a.

In operation, the workpieces 18a and 20a and pin 12a and collar 14a are pre-assembled via the engagement of tab 63a in the lock grooves 26a. Next a squeeze type installation tool 48a is applied to the fastener 10a and a relative axial force is applied between the pin 12a and collar 14a via a swage anvil 56a engaging the outer end of the collar 14a and a reaction member 80 adapted to engage the pin head 22a. As the relative axial force increases the tab 63a will deform sufficiently to permit the collar 14a to move further axially relative to the pin 12a. The workpieces 18a and 20a will be clamped together at a preselected preload by the relative axial force initially applied between the pin 12a and collar 14a and, as the axial force increases, the collar 14a is swaged into the lock groove portion 25a completing the swaging operation.

Note that the contour of the swage cavity of the swage anvil 56a and the contour of the outer end of the collar 14a are such that swaging of the collar 14a into the lock grooves 26a will not start to occur at the lower magnitude of relative axial force required to deform the tab 63a over the lock grooves 26a at the initiation of the swage operation.

The tool 48a can be of a construction of a known type in which the swage anvil 56a and reaction member 80 are located in a generally "C" shaped housing with the anvil 56a and reaction member 80 being moved towards each other when the tool 48a is actuated to apply a relative axial force to squeeze the fastener located in between.

As noted the tab 63 is located at the outer end or top of the collar 14. This is to minimize the amount of lock groove volume that might be taken up by the significantly weaker tab material and hence to minimize any loss of strength of the lock between pin 12 and collar 14. By thus locating the tab 63, the material of the tab 63 will be least likely to be fully located in one of the lock grooves which is to receive the material of the collar in swage. At the same time, the tab material will be more readily able to extrude forwardly and out of the grooves since the front end of the collar 14 is open. Thus the location of the tab 63 at the front end rather than within the confines of collar 14 is desirable. At the same time the use of only a limited circumferential length of tab 63 minimizes the volume of tab 63 that might be located in a lock groove 26 in lieu of the harder collar material. Thus it is believed advantageous that the tab extend circumferentially for no more than between around 10% to around 25% of the collar circumference. Of course, more than one tab could be used.

The tab, such as tab 63, could be located at the flange end of the collar 14, see Figure 8. The collar in Figure 8 is identical to that shown in Figure 1 and 2 except for the location of the tab and hence the similar components and portions have been given the same numerical designation with the addition of later postscript "b". In this case the collar 14b with tab 63b located at the outer end of flange 59b would have the added advantage of permitting the tab 63b to be closer to the lock groove section upon the initial pre-assembly. Hence a wider gap between workpieces could be accommodated by such a construction. Note that the tab 63b has the same contour as tab 63 with the leading surface 67b and trailing surface 65b angled to facilitate pin insertion and resist collar removal. By locating the tab 63b near the bottom of the collar 14b and generally in line with the flange 59b, the tab 63b will not engage lock grooves which are to be filled in swage. Even with collars without the flange 59b, the material of the collar near the sheet line is not normally completely swaged into a lock groove. Thus the tab 63b, as located, will generally not affect the strength of the finally swaged fastener.

Although a variety of materials would be suitable for the tab 63, a flexible urethane having a hardness of about a Shore A70 to about a Shore A90 was found satisfactory. Another suitable material for tab 63 is an ethylene copolymer such as ethylene vinyl acetate having a hardness of about a Shore A70 to about a Shore A90.

The tab 63 can be formed and secured to the collar 14 by a single technique as shown in Figures 6 and 7. Thus in Figure 6 the collar 14 is provided to be clean and free of lubricant or other surface coating that might resist adhesion of the plastic material being used. Next a pellet 84 of the plastic material is located within the bore 61 of the collar 14. The collar 14 is supported on a surface 86 which is inclined slightly from the horizontal so that the pellet 84 will naturally move against the inside collar surface of bore 61. Next heat is applied to the pellet 84 to cause the pellet 84 to melt and undergo its chemical transformation to the desired platic form. At the same time the melted pellet 84 flows against the surface of collar bore 61 to assume the desired final shape of the tab 63. Upon cooling, the tab 63 has been formed to the desired shape and is secured to the collar 14. Thus the tab 63 can be formed to a desired shape and at the same time be bonded to the collar 14 in a single procedure. Of course the volume of the pellet 84 will be selected to yield the desired volume and radial extent of the tab 63. Note also that by the use of adhesion, as shown, the shape and volume of the collar 14 can be maintained in its conventional form without the need for retaining grooves etc.

Thus in the present invention, a simple but effective structure is provided to permit a rapid preassembly of workpieces with a swage type fastener. The fastener structure permits subsequent disassembly prior to final installation and ultimately provides the advantages inherent in a swage type system.

## Claims

1. A fastening system including a fastener (10) for securing workpieces together in a pre-assembly with said fastener (10) adapted to be finally installed via a relative axial force applied by a tool (48), said fastener (10) including a pin member (12) having an elongated shank (15) terminating at one end in an enlarged pin head (22), said shank (15) including a lock portion (25) having a plurality of circumferentially extending lock grooves (26) and lock ridges, each of said lock grooves (26) having a leading side surface (64) and a trailing side surface (66), a tubular collar (14) adapted to be located on said pin shank (15) and to be swaged into said lock grooves (26) in response to a first preselected magnitude of said relative axial force applicable by the tool (48), said collar (14) having a through bore (61) of a diameter to generally receive said lock portion (25) in clearance relationship, and collar retaining means formed at the extremity of one end of said collar (14) and extending radially inwardly relative to said through bore (61) and adapted to engage said lock grooves (26), characterized in that said retaining means comprises a single tab (63) constructed of a flexible readily deformable material permitting said tab (63) to substantially deform into the shape of the confronting surface of said lock grooves (26) and lock ridges, said tab (63) having a leading surface (67) and a trailing surface (65) to define a contour cooperating with said leading and trailing side surfaces (64, 66) of said lock grooves (26) to facilitate assembly of said collar (14) over said lock grooves (26) and to resist at a substantially higher load the removal of said collar (14) from said lock grooves (26), and said tab (63) having a preselected strength selected to deform out of said lock grooves (26) in response to a second preselected magnitude of relative axial force applied between said pin member (12) and said collar (14) by the tool with said second preselected magnitude being less than said first preselected magnitude, said tab (63) having its flexibility and circumferential extent selected to permit removal of said collar (14) from said lock grooves (26) at a removal load which is considerably higher than the application load and to permit reapplication of said collar (14) to said pin member (12) to engage said lock grooves (26) for again securing the workpieces together with the desired pre-assembly.

2. The system of claim 1, characterized in that said single tab (63) is formed from a plastic material having a hardness of about a Shore A70 to about a Shore A90.

3. The system of claim 1 or 2, characterized in that said leading surface (67) of said single tab (63) extends at an angle of between 30° and 60° with the surface of said collar bore (61) and with said trailing surface (65) extending generally in quadrature to said collar bore (61) surface.

4. The system of claim 1, 2 or 3, characterized in that said single tab (63) has a deformed width when located in said lock grooves (26) at least equal to the approximate width of said lock grooves (26), said tab (63) having a generally tapered structure being substantially wider adjacent said collar (14) and narrower at its radially inner extremity, the leading surface (67) of said tab (63) being angulated from said one end of said collar (14) towards the opposite end of said collar (14), the trailing surface (65) extending generally in quadrature with the axis of said collar (14).

5. The system of any of claims 1 to 4, wherein the elongated shank (15) of the pin member (12) has a breakneck groove (40) defining the weakest portion of said pin shank (15) and located between said pull portion (42) and said lock grooves (26), said pull portion (42) being of a diameter less than said lock grooves (26) and including a plurality of pull grooves (44), each of said pull grooves (44) having a leading and trailing flank surfaces (72, 74), characterized in that said single tab (63) extends for substantially less than the full circumference of said collar (14), said tab (63) having a deformed width when located in said lock grooves (26) at least equal to the approximate width of said lock grooves (26), said tab (63) extending radially inwardly sufficiently to engage said pull grooves (44), said leading and trailing tab surfaces (67, 65) cooperating with said leading and trailing flank surfaces (72, 74) of said pull grooves (44) to facilitate assembly of said collar (14) over said pull grooves (44) and to resist at a substantially higher load the removal of said collar (14) from said pull grooves (44).

6. The system of claims 4 and 5, characterized in that the leading flank surface (72) of each of said pull grooves (44) is angulated towards said pin head (22) at an acute angle relative to a plane transverse to the pin axis greater than the similar angulation of the trailing flank surface (74) of each pull groove (44) away from said pin head (22).

7. The system of any of claims 1 to 6, characterized in that said single tab (63) extends circumferentially no greater than about 25% of the circumference of said collar (14).

8. A method of forming the single tab in the fastening system of any of the preceding claims, characterized by the steps of forming said tab (63) on said collar (14), by providing said collar (14) with at least one end in clean form, locating a pellet (84) of plastic material within said collar bore (61) and at said one end, and applying heat to said pellet (84) to cause it to melt and to form said tab (63) adhering to said collar (14) at said one end.

9. The method of claim 8, characterized in that said pellet (84) is supported on an incline relative to said collar bore (61) whereby said pellet (84) will be moved to only one side of said collar bore (61).

10. The method of claim 8 or 9, characterized by the step of selecting the volume of said pellet (84) employed to form said single tab (63) such that the tab (63) extends for no greater than about 25% of the circumference of said collar (14).

11. The method of claim 8, 9 or 10, characterized in that said single tab (63) is constructed of a flexible readily deformable material having a hardness of about a Shore A70 to about a Shore A90.

**Patentansprüche**

1. Befestigungssystem mit einem Befestigungselement (10) zum Befestigen von Werkstücken eineinander in einer vormontierten Anordnung einer des Befestigungselement (10) enthaltenden, vormontierten Anordnung, die zum endgültigen Einbau mittels einer mit einem Werkzeug (48) ausgeübten relativen Axialkraft geeignet ist, wobei des Befestigungselement (10) einen Zapfen (12) besitzt, der einen langgestreckten Schaft (15) aufweist, der am einen Ende in einem verbreiterten Zapfenkopf (22) endet und der einen Festlegeteil (25) aufweist, der eine Mehrzahl von sich in der Umfangsrichtung erstreckenden Festlegenuten (26) und Festlegerippen besitzt, wobei jede dieser Festlegenuten (26) eine Vorderflanke (64) und eine Hinterflanke (66) besitzt, ferner einen rohrförmigen Pund (14), der auf dem Zapenschaft (15) positionierbar und unter der Einwirkung einer mit dem Werkzeug (48) in einer ersten vorgewählten Stärke ausgeübten relativen Axialkraft in die Festlegenuten (26) fließpreßbar ist, der Bund (14) von einer Bohrung (61) durchsetzt ist, die einen solchen Durchmesser besitzt, daß die den Festlegeteil (25) allgemein mit einer Spielpassung aufnehmen kann, und am einen äußersten Ende des Bundes (14) vorgesehene Bundhaltemittel, die sich relativ zu der durchgehenden Bohrung (61) radial einwärts erstrecken und zum Eingriff in die Festlegenuten (26) geeignet sind, dadurch gekennzeichnet, daß die Haltemittel einen einzigen Lappen (63) aufweisen, der aus einem flexiblen, leicht verformbaren Werkstoff besteht, daß der Lappen (63) im wesentlichen unter Bildung einer zu den festlegenuten (26) und Festlegerippen komplementären Fläche verformbar ist, daß der Lappen (63) eine Vorderfläche (67) und eine Hinterfläche (65) besitzt, die ein Profil bilden, das mit der Vorder- und der Hinterflanke (64, 66) der Festlegenuten (26) derart zusammenwirkt, daß das Anbringen des Mundes (14) über den Festlegenuten (26) erleichtiert und eine Wegnahme des Bundes (14) von den Festlegenuten (26) unter einer beträchtlich höheren Last verhindert wird, und daß der Lappen (63) eine vorgewählte Festigkeit hat, die so gewählt ist, daß er unter der Einwirkung einer mit dem Werkzeug in einer zweiten vorgewählten Stärke zwischen dem Zapfen (12) und dem Bund (14) ausgeübten relativen Axialkraft aus den Festlegenuten (26) heraus verformt wird, wobei die zweite vorgewählte Stärke kleiner ist als die erste vorgewählte Stärke und die Flexibilität und die Umfangslänge des Lappens (63) so gewählt sind, daß der Bund (14) von den Festlegenuten (26) unter der Einwirkung einer Magnahmelast wegnehmbar ist, die beträchtlich höher ist als die Anbringlast und zum erneuten Befestigen der Werkstücke aneinander in der gewünschten vormontierten Anordnung der Bund (14) erneut unter Eingriff in die Festlegenuten (26) an dem Zapfen (12) anbringbar ist.

2. System nach Anspruch 1, dadurch gekennzeichnet, daß der einzige Lappen (63) aus einem Kunststoff mit einer Shorehärte von etwa A70 bis etwa A90 besteht.

3. System nach Anspruch 1 oder 2, dadurch gekennzeichnet, daß die Vorderfläche (67) des einzigen Lappens (63) sich unter einem Winkel zwischen 30 und 60 Grad zu der Wandung der Bohrung (61) des Bundes ersterckt und daß sich die Hinterfläche (65) allgemein rechtwinklig zu der Wandung der Bohrung (61) des Bundes erstreckt.

4. System nach Anspruch 1, 2 oder 3, dadurch gekennzeichnet, daß die Breite des in die Festlegenuten (26) hinein verformten, einzigen Lappens (63) ebenso groß ist wie die ungefähre Breite der Festlegenuten (26), daß der Lappen (63) allgemein verjüngt und im Bereich des Bundes (14) beträchtlich breiter und an seinem radial inneren Ende schmaler ist, daß sich die Vorderfläche (67) des Lappens von dem genannten einen Ende des Bundes (14) schräg zu dem entgegengesetzten Ende des Bundes (14) hin erstreckt und daß sich die Hinterfläche (65) allgemein rechtwinklig zu der Achse des Bundes (14) erstreckt.

5. System nach einem der Ansprüche 1 bis 4, in dem der langgestreckte Schaft (15) des Zapfens (12) eine Sollbruchnut (40) besitzt, die den schwächsten Teil des Zapfenschaftes (15) begrenzt und zwischen einem Ziehteil (42) des Zapfenschaftes (15) und den Festlegenuten (26) angeordnet ist und daß der Ziehteil (42) im Durchmesser kleiner ist als die Festlegenuten (26) und eine Mehrzahl von Ziehnuten (44) besitzt, von denen jede eine Vorder- und eine Hinterflanke (72, 74) aufweist, dadurch gekennzeichnet, daß sich der einzige Lappen (63) über beträchtlich weniger als die den ganzen Umfang des Bundes (14) erstreckt, daß der in die Festlegenuten (26) hinein verformte Lappen (63) eine Breite hat, die mindestens ebenso groß ist wie die ungefähre Breite der Festlegenuten (26), daß sich der Lappen (63) bis zum Eingriff in die Zeihnuten (44) radial einwärts erstreckt, und daß die Vorderund die Hinterfläche (67, 65) des Lappens mit der Vorder- und der Hinterfläche (72, 74) der Ziehnuten (44) derart zusammenwirken, daß das Anbringen des Bundes (14) über den Ziehnuten (44) unter einer beträchtlich höheren Last verhindert wird.

6. System nach Anspruch 4 und 5, dadurch gekennzeichnet, daß sich die Vorderflanke (72) jeder der Ziehnuten (44) relativ zu einer quer zu der Zapfenachse liegenden Ebene zu dem Zapfenkopf (22) hin unter einem spitzen Winkel erstreckt, der größer ist als der ähnliche Winkel, unter sich die Rückflanke (74) jeder Ziehnut (44) schräg von dem Zapfenkopf (22) weg erstreckt.

7. System nach einem der Ansprüche 1 bis 6, dadurch gekennzeichnet, daß sich der einzige Lappen (63) in der Umfangsrichtung über nicht mehr als etwa 25% des Umfanges des Bundes (14) erstreckt.

8. Verfahren zum Ausbilden des einzigen Lappens in dem Befestigungssystem nach einem der vorhergehenden Ansprüche, gekennzeichnet durch folgende Schritte: zum Ausbilden des Lappens (63) an dem Bund (14) wird der Bund (14) wenigstens am einen Ende in einen sauberen Zustand gebrecht, eine Tablette (84) aus Kunststoff wird in der Bohrung (61) des Bundes und an dem genannten einen Ende angeordnet, und auf die Tablette (84) wird Wärme zur Einwirkung gebracht, so daß die Tablette schmitzt und den Lappen (63) bildet, der an dem genannten einen Ende des Bundes (14) mit diesem verklebt ist.

9. Verfahren nach Anspruch 8, dadurch gekennzeichnet, daß die Tablette (84) auf einer gegenüber der Bohrung (61) des Bundes geneigten Fläche abgestützt wird, so daß die Tablette (84) nur zur einen Seite der Bohrung (61) des Bundes hin bewegt wird.

10. Verfahren nach Anspruch 8 oder 9, dadurch gekennzeichnet, daß das Volumen der zum Bilden des einzigen Lappens (63) verwendeten Tablette (84) so gewählt wird, daß sich der Lappen (63) über nicht mehr als etwa 25% des Umfanges des Bundes (14) erstreckt.

11. Verfahren nach Anspruch 8, 9 oder 10, dadurch gekennzeichnet, daß der einzige Lappen (63) von einem flexiblen, leicht verformbaren Werkstoff gebildet wird, der eine Shorehärte von etwa A70 bis etwa A90 hat.

**Revendications**

1. Un système de fixation comportant un organe de fixation (10) pour fixer ensemble de pièces dans un préassemblage, ledit organe de fixation (10) étant adapté pour être finalement installé par l'intermédiaire d'une force axiale relative appliquée par un outil (48), ledit organe de fixation (10) comprenant un élément formant broche (12), pourvu d'une tige allongée (15) se terminant à une extrémité par une tête élargie (22), ladite tige (15) comportant une partie de blocage (25) comportant une pluralité de rainures de blocage (26) et de nervures de blocage s'étendant circonférantiellement, chacune desdites rainures de blocage (26) comportant une surface latérale avant (64) et uné surface latérale arrière (66), une bague tubulaire (14) adaptée pour être placée sur ladite tige de broche (15) et pour être estampée dans lesdites rainures de blocage (26) en réponse à une première grandeur présélectionnée de ladite force axiale relative pouvant être appliquée par l'outil (48), ladite bague (14) comportant un trou traversant (61) d'un diamètre permettant généralement la réception de ladite partie de blocage (25) avec du jeu, et un moyen de retenue de bague formé à l'extrémité d'un bout de ladite bague (14) et s'étendant radialement vers l'intérieur par rapport audit trou traversant (61) et adapté pour s'accorcher dans lesdites rainures de blocage (26), caractérisé en ce que ledit moyen de retenue comprend une seule patte (63) constituée d'un matériau flexible et facilement déformable pour permettre à ladite patte (63) de se déformer sensiblement selon la profil de la surface correspondante desdites rainures de blocage (26) et desdites nervures de blocage, ladite patte (63) comportant une surface avant (67) et une surface arrière (65) pour définir un contour coopérant avec lesdites surfaces latérales avant et arrière (64, 66) desdites rainures de blocage (26) pour faciliter l'accrochage de ladite bague (14) dans lesdites rainures de blocage (26) et pour s'opposer, pour une chaarge sensiblement plus grande, à l'enlèvement de ladite bague (14) hors desdites rainures de blocage (26), et ladite patte (63) ayant une résistance présélectionnée qui est choisie pour qu'elle se déforme hors desdites rainures de blocage (26) en réponse à une seconde grandeur présélectionnée de la force axiale relative exercée entre ledit élément formant tige (12) et ladite bague (14) par l'outil, ladite seconde grandeur présélectionnée étant inférieure à ladite première grandeur présélectionnée, la flexibilité et la dimension circonférentielle de ladite patte (63) étant choisies pour permettre un enlèvement de ladite bague (14) hors desdites rainures de blocage (26) sous l'effet d'une charge d'enlèvement qui est considérablement supérieure à la charge précitée et pour permettre une remise en place de ladite bague (14) sur ledit élément formant broche (12) pour un réengagement dans lesdites rainures de blocage (26) afin de fixer à nouveau les pièces ensemble dans la condition désirée de préassemblage.

2. La système selon la revendication 1, caractérisé en ce que ladite patte unique (63) est formée d'une matière plastique ayant une dureté comprise entre environ Shore A70 et environ Shore A90.

3. Le système selon une des revendications 1 ou 2, caractérisé en ce que ladite surface avant (67) de ladite patte unique (63) fait un angle compris entre 30° et 60° avec la surface dudit trou de bague (61) et avec ladite surface arrière (65) s'étendant généralement perpendiculairement à ladite surface du trou de bague (61).

4. Le système selon une des revendications 1, 2 ou 3, caractérisé en ce que ladite patte unique (63) a une largeur de déformation, lorsqu'elle est engagée dans lesdites rainures de blocage (26), qui est au moins égale à la largeur approximative desdites rainures de blocage (26), ladite patte (63) ayant dans l'ensemble une structure effilée qui est sensiblement plus large dans une zone adjacente à ladite bague (14) et plus étroite à son extrémité radialement intérieure, la surface avant (67) de ladite patte (63) étant inclinée à partir de ladite extrémité de ladite bague (14) et en direction de l'extrémité opposée de ladite bague (14), la surface arrière (65) s'étendant généralement perpendiculairement à l'axe de ladite bague (14).

5. Le système selon une quelconque des revendications 1 à 4, dans lequel la tige allongée (15) de l'élément formant broche (12) comporte une rainure (40) formant col de rupture, définissant la partie la plus faible de ladite tige de broche (15) et située entre ladite partie de traction (42) et lesdites rainures de blocage (26), ladite partie de traction (42) ayant un diamètre inférieur auxdites rainures de blocage (26) et comprenant une pluralite de rainures de traction (44), chacune desdites rainures de traction (44) comportant des surfaces de flanc avant et arrière (72, 74), caractérisé en ce que ladite patte unique (63) a une dimension sensiblement inférieure à la circonférence totale la ladite bague (14), ladite patte (63) ayant une largeur à l'état déformé, quand elle est engagée dans lesdites rainures de blocage (26), qui est au moins égale à la largeur approximative desdites rainures de blocage (26), ladite patte (63) s'étendant radialement vers l'intérieur suffisamment pour s'accrocher dans lesdites rainures de traction (44), lesdites surfaces avant et arrière (67, 65) de la patte coopérant avec lesdites surfaces de flanc avant et arrière (72, 74) desdites rainures de traction (44) pour faciliter l'accrochage de ladite bague (14) dans lesdites rainures de traction (44) et pour s'opposer, sous l'effet d'une charge sensiblement plus grande, à l'enlèvement de ladite bague (14) à partir desdites rainures de traction (44).

6. Le système selon les revendications 4 et 5, caractérisé en ce que la surface de flanc avant (72) de chacune des rainures de traction (44) est inclinée en direction de ladite tête de broche (22) selon un angle aigu par rapport à un plan transversal à l'axe de broche, cette inclinaison étant plus grande que l'inclinaison semblable de la surface de flanc arrière (74) de chaque rainure de traction (44) quand on s'éloigne de ladite tête de broche (22).

7. Le système selon une quelconque des revendications 1 à 5, caractérisé en ce que ladite patte unique (63) s'étend circonférentiellement sur une longueur non supérieure à environ 25% de la circonférence de ladite bague (14).

8. Un procédé de formation de ladite patte unique dans le système de fixation selon une quelconque des revendications précédentes, caractérisé par les étapes de formation de ladite patte (63) sur ladite bague (14), d'agencement de ladite bague (14) avec une forme nette au moins à une extrémité, de mise en place d'une boulette (84) de matière plastique à l'intérieur dudit trou (61) de la bague et à ladite extrémité, et d'application de chaleur à ladite boulette (84) pour la faire fondre et pour former ladite patte (63) en adhérence avec ladite bague (14) à ladite extrémité.

9. Le procédé selon la revendication 8, caractérisé en ce que ladite boulette (84) est supportée sur une surface inclinée par rapport audit tour (61) de la bague de telle sorte que ladite boulette (84) soit déplacée seulement d'un côté dudit trou (61) de ladite bague.

10. Le procédé selon la revendication 8 ou 9, caractérisé par l'étape de sélection du volume de ladite boulette (84) utilisée pour former ladite patte unique (63) de telle sorte que la patte (63) ne s'étende par plus qu'environ 25% de la circonférence de ladite bague (14).

11. Le procédé selon une des revendications 8, 9 ou 10, caractérisé en ce que ladite patte unique (63) est formée d'un matériau flexible et facilement déformable, ayant une dureté comprise entre environ Shore A70 et Shore A90.

Fig-1

Fig-2

Fig-3

1

EP 0 231 269 B1

Fig-4

Fig-5

Fig-6

Fig-7

Fig-8

2